# EUROPEAN PATENT APPLICATION

(11) **EP 4 498 315 A1**
(43) Date of publication of application: **29.01.2025**
(21) Application number: 22933258.0
(22) Date of filing: 22.03.2022
(51) Int. Cl.: G06T 1/00, G06V 40/10, G06V 40/16, G06V 40/19

(54) **INFORMATION PROCESSING DEVICE, INFORMATION PROCESSING METHOD, AND RECORDING MEDIUM**

(71) Applicant: NEC Corporation, 108-8001 Tokyo (JP); NEC Platforms, Ltd., Kanagawa 213-8511 (JP)
(72) Inventor: KOMAMURA, Yuta, Kawasaki-shi, Kanagawa 213-8511 (JP)
(74) Representative: Betten & Resch
(86) International application number: PCT/JP2022/013118
(87) International publication number: WO 2023/181110

(57) **Abstract**

An information processing apparatus according to this disclosure includes: a capturing unit that captures a target and generates a captured image; a driving unit that changes a capturing angle of the capturing unit; and an estimating unit that estimates height information of a predetermined part of the target based on the captured image and the capturing angle.

## Description

### [Technical field]

This disclosure relates to information processing apparatus, information processing method and storage medium.

### [Background Art]

Patent Literature 1 discloses an authentication system that authenticates a target person using a face image generated by capturing a face of the target person.

### [Citation List]

### [Patent Literature]

PTL 1: WO 2015-136938

### [Summary of Invention]

### [Technical Problem]

Since the camera is fixed in the authentication system disclosed in Patent Literature 1, the accuracy of biometric authentication may be lowered depending on the height of the person to be authenticated.

An object of this disclosure is to provide an information processing apparatus, an information processing method and a storage medium capable of acquiring a biometric image suitable for biometric authentication.

### [Solution to Problem]

According to one aspect of the disclosure, there is provided an information processing apparatus including: a capturing unit that captures a target and generates a captured image; a driving unit that changes a capturing angle of the capturing unit; and an estimating unit that estimates height information of a predetermined part of the target based on the captured image and the capturing angle.

According to another aspect of the disclosure, there is provided an information processing method including: capturing a target by using a capturing device and generating a captured image; changing a capturing angle of the capturing device; and estimating height information of a predetermined part of the target based on the captured image and the capturing angle.

According to yet another aspect of the disclosure, there is provided a storage medium storing a program that causes a computer to perform: capturing a target by using a capturing device and generating a captured image; changing a capturing angle of the capturing device; and estimating height information of a predetermined part of the target based on the captured image and the capturing angle.

### [Brief Description of Drawings]

[FIG. 1] FIG. 1 is a block diagram illustrating an example of an overall configuration of an authentication system according to a first embodiment.
[FIG. 2] FIG. 2 is a block diagram illustrating an example of a hardware configuration of an authentication device according to the first embodiment.
[FIG. 3] FIG. 3 is a front view illustrating an appearance of the authentication device according to the first embodiment.
[FIG. 4] FIG. 4 is a perspective view for explaining the internal structure of the authentication device according to the first embodiment.
[FIG. 5] FIG. 5 is a flowchart schematically illustrating a process performed by the authentication system according to the first embodiment.
[FIG. 6] FIG. 6 is a schematic view illustrating a capturing angle and a capturing range of the camera in the authentication device according to the first embodiment.
[FIG. 7] FIG. 7 is a diagram illustrating an example of a captured image according to the first embodiment.
[FIG. 8] FIG. 8 is a schematic view illustrating a capturing angle and a capturing range of the camera in the authentication device according to the first embodiment.
[FIG. 9] FIG. 9 is a diagram illustrating an example of a captured image according to the first embodiment.
[FIG. 10] FIG. 10 is a schematic view illustrating a capturing angle and a capturing range of the camera in the authentication device according to the first embodiment.
[FIG. 11] FIG. 11 is a diagram illustrating an example of a captured image according to the first embodiment.
[FIG. 12] FIG. 12 is a block diagram illustrating an example of a hardware configuration of the authentication device according to a second embodiment.
[FIG. 13] FIG. 13 is a schematic view illustrating a capturing angle and a capturing range of the authentication device according to the second embodiment.
[FIG. 14] FIG. 14 is a schematic diagram illustrating a capturing angle and a capturing range of the authentication device according to the second embodiment.
[FIG. 15] FIG. 15 is a flowchart schematically illustrating a process performed by the authentication system according to the second embodiment.
[FIG. 16] FIG. 16 is a block diagram illustrating an example of a hardware configuration of the authentication device according to a third embodiment.
[FIG. 17] FIG. 17 is a schematic diagram illustrating a capturing angle and a capturing range of the authentication device according to the third embodiment.
[FIG. 18] FIG. 18 is a schematic diagram illustrating a capturing angle and a capturing range of the authentication device according to the third embodiment.
[FIG. 19] FIG. 19 is a flowchart illustrating an outline of a process performed by the authentication system according to a fourth embodiment.
[FIG. 20] FIG. 20 is a flowchart illustrating an outline of a process performed by the authentication system according to a fifth embodiment.
[FIG. 21] FIG. 21 is a flowchart illustrating an outline of a process performed by the authentication system according to a sixth embodiment.
[FIG. 22] FIG. 22 is a functional block diagram illustrating an overall configuration of an information processing apparatus according to a seventh embodiment.

### [Description of Embodiments]

Hereinafter, exemplary example embodiments of this disclosure will be described below with reference to the drawings. Throughout the drawings, the same elements or corresponding elements are labeled with the same references, and the description thereof may be omitted or simplified.

### [First Embodiment]

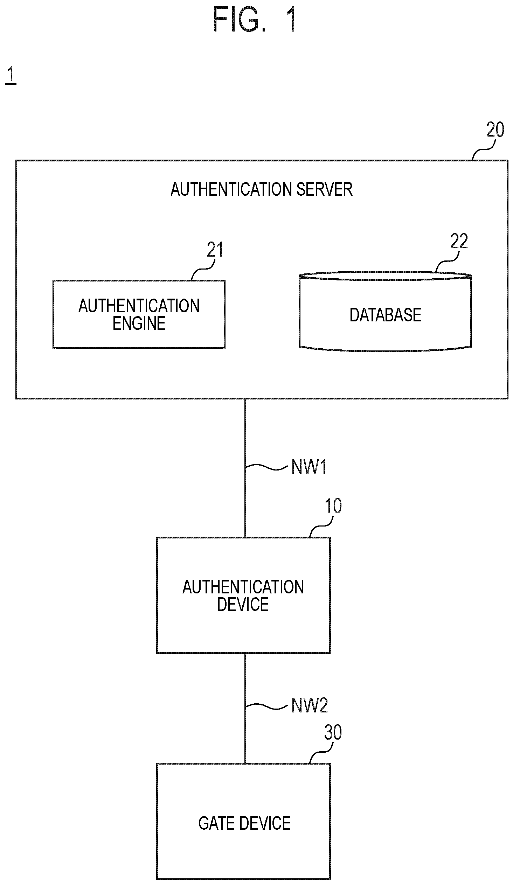

First, the configuration of the authentication system 1 according to a first embodiment will be described. FIG. 1 is a block diagram illustrating an example of an overall configuration of an authentication system 1 according to the first embodiment.

The authentication system 1 acquires biometric information of a person (hereinafter, it is also referred to as an authentication target.) to be authenticated, and performs biometric authentication by matching the biometric information with registered biometric information registered in advance. In addition to the biometric authentication, the authentication system 1 also authenticates the person based on height information of the person. The height information is estimated from the captured image. The authentication system 1 performs two-factor authentication. The "authentication target" includes not only a person but also an animal such as a dog or a snake, a plant, a robot, and the like. In the case of an object such as a robot, other than a living thing, the term "biometric information" may be referred to as an "appearance information".

In this specification, the term "height information" mainly indicates body height of the person, but the height information is not limited to the body height. For example, the term "height information" may indidate the height from the ground to the position of a predetermined part (eyes, nose, ears, mouth, etc.) of a person. The height information includes not only the height from the ground but also the length from the foot of an object to a predetermined part (eyes, nose, ears, mouth, etc.). It is preferable that the predetermined part to be estimated for the height information is eyes, a nose, ears, a mouth, a jaw, or the like. In this case, there is an advantage that the position of the predetermined part can be easily calculated from a face image.

The authentication system 1 can be applied to, for example, identity confirmation for entry and exit at an airport, identity confirmation for administrative agencies, identity confirmation for entry and exit at a factory or an office, identity confirmation for entry and exit at an event venue, and the like.

As illustrated in FIG. 1, the authentication system 1 includes an authentication device 10, an authentication server 20, and a gate device 30. Each device is connected to networks NW1 and NW2 such as a local area network (LAN) or the Internet.

The authentication device 10 captures an authentication target existing in a predetermined area, and outputs a capured image to the authentication server 20. In the first embodiment, the term "predetermined area" indicates a predetermined range of three-dimensional space located in front of the authentication device 10.

The authentication server 20 is a computer that performs biometric authentication, and includes an authentication engine 21 and a database 22. The authentication engine 21 performs matching process between the biometric information (or feature amount) of the authentication target captured by the authentication device 10 and the registered biometric information (or feature amount) of a registrant registered in the database 22 in advance, and performs face authentication of the authentication target based on the matching result.

The database 22 is a storage device that stores various information such as a biometric image of the registrant, height information, attribute information, and the like in association with a registrant ID. The biometric information and height information of the registrant are registered in the database 22 in advance based on a request from the registrant.

For example, a person who requests to use the authentication system 1 stands in front of a registration terminal (not illustrated) having the same function as the authentication device 10, and operates the registration terminal to capture his or her own face. The captured face image is registered in the database 22 as a registered biometric image. The registration terminal calculates height information based on a method for estimating height information, described later, a captured image of the person, a capturing angle of a camera 107, and a distance to the person. The calculated height information is registered in the database 22 as registered height information.

The gate device 30 controls passage of the person by opening and closing a gate (not illustrated) based on control information from the authentication device 10. The gate device 30 transitions from a closed state for a standby period to block passage of the person to an open state to permit passage of the person when the authentication of the person at the authentication device 10 is successful. The scheme of the gate is not particularly limited and may be, for example, a flapper gate in which one or more flappers provided to one side or both sides of a passage are opened and closed, a turn style gate in which three bars are revolved, or the like.

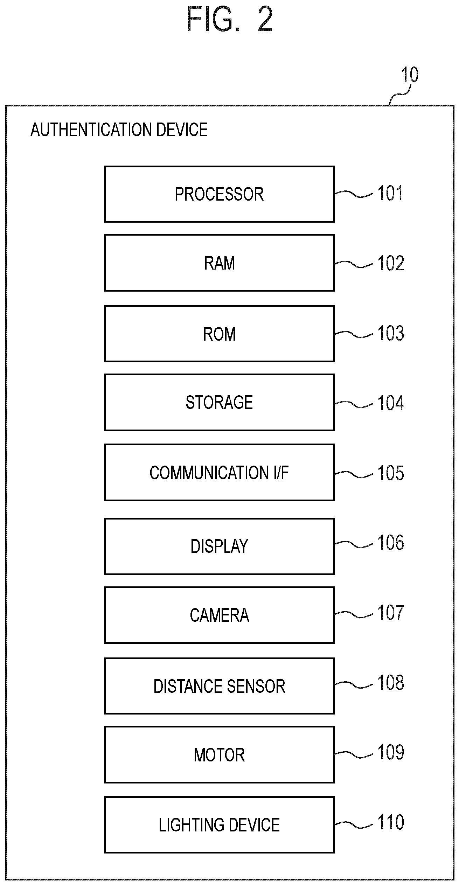

FIG. 2 is a block diagram illustrating an example of a hardware configuration of the authentication device 10 according to the first embodiment. The authentication device 10 includes a processor 101, a random access memory (RAM) 102, a read only memory (ROM) 103, a storage 104, a communication interface (I/F)) 105, a display 106, a camera 107, a distance sensor 108, a motor 109, and a lighting device 110 as computers that perform calculation, control, and storage. The devices are connected to each other via a bus, a wiring, a drive device, or the like (not illustrated).

The processor 101 has functions of performing a predetermined calculation in accordance with a program stored in the ROM 103, the storage 104, and the like, and controlling each unit of the authentication device 10. As the processor 101, a central processing unit (CPU), a graphics processing unit (GPU), a field programmable gate array (FPGA), a digital signal processor (DSP), an application specific integrated circuit (ASIC), and the like may be used. One of the examples described above may be used, or a plurality of them may be used in parallel.

The RAM 102 is volatile storage medium and provides a temporary memory region required for the operation of the processor 101. The RAM 102 may be, for example, a dynamic RAM (D-RAM). The ROM 103 is a nonvolatile storage medium and stores necessary information such as a program used for the operation of the authentication device 10. The ROM 103 may be, for example, a programmable ROM (P-ROM).

The storage 104 is a nonvolatile storage medium and stores data, a program for the operation of the authentication device 10, and the like. The storage 104 is , for example, a hard disk drive (HDD) or a Solid State Drive (SSD).

The communication I/F 105 is a communication interface based on a specification such as Ethernet (registered trademark), Wi-Fi (registered trademark), 4G, 5G, or the like and is a module used for communication with another device.

The processor 101 loads programs stored in the ROM 103, the storage 104, or the like into the RAM 102 and performs the programs.

The display 106 displays moving images, still images, text, and the like. The display 106 displays, for example, guidance information related to authentication and authentication results. As the display 106, a liquid crystal display, an organic light emitting diode (OLED) display, or the like are used.

The camera 107 is a capturing device that captures a target by receiving, via an optical system, light incident from the target at a light receiving element. The camera 107 according to the first embodiment captures an authentication target existing in a predetermined area in front of the device. As the camera 107, a digital camera using a complementary metal oxide semiconductor (CMOS) image sensor, a charge coupled device (CCD) image sensor, or the like may be used so as to be suitable for image processing in the authentication device 10.

The distance sensor 108 is a measuring device that measures a distance from the camera 107 to the authentication target. The distance sensor 108 may be capable of optically measuring the distance from the camera 107 to the authentication target. Examples of the distance sensor 108 capable of optically measuring the distance include a time of flight (TOF) type sensor, a triangulation type sensor, and a light detection and ranging (LiDAR). Further, as the distance sensor 108, a proximity sensor for non-contact detection of an approaching target may be used.

The motor 109 is a driving device that drives an object connected to a rotating shaft. In the first embodiment, the camera 107 is connected to the rotating shaft of the motor 109. The camera 107 may not be directly connected to the rotating shaft of the motor 109. For example, the camera 107 may be indirectly connected to the rotating shaft via a gear or a belt and driven by the motor 109.

The lighting device 110 is a light source that irradiates illumination light toward the front. The timing of irradiation of the illumination light by the lighting device 110 is synchronized with the timing of capturing by the camera 107.

Note that the hardware configuration illustrated in Fig. 2 is an example, a device other than the above may be added, or some of the devices may not be provided. Further, some of the devices may be replaced with another device having substantially the same function. Further, some functions in the first example embodiment may be provided by another device via the network, or the functions in the first example embodiment may be distributed to a plurality of devices and implemented therein. The hardware configuration illustrated in the figure can be modified as necessary.

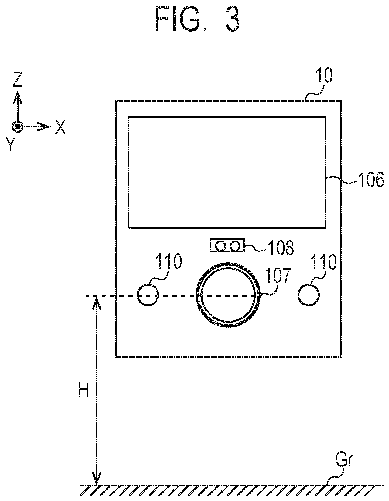

FIG. 3 is a front view illustrating an appearance of the authentication device 10 according to the first embodiment. In FIG. 3, the positional relationship of the components constituting the authentication device 10 will be described using a three-dimensional coordinate system. The three-dimensional coordinate system is constituted by the X-axis, the Y-axis, and the Z-axis which are orthogonal to each other. The X-axis and the Y-axis are in a horizontal plane. The X-axis and the Y-axis are orthogonal to each other. The Z-axis is an axis orthogonal to the horizontal plane.

In FIG. 3, a display 106, a distance sensor 108, and a camera 107 are arranged in this order from the top along the center line of the authentication device 10. A pair of lighting devices 110 are arranged on both sides of the camera 107. The center point of the light-receiving region of the camera 107 is positioned at a height H from the ground Gr in the vertical direction.

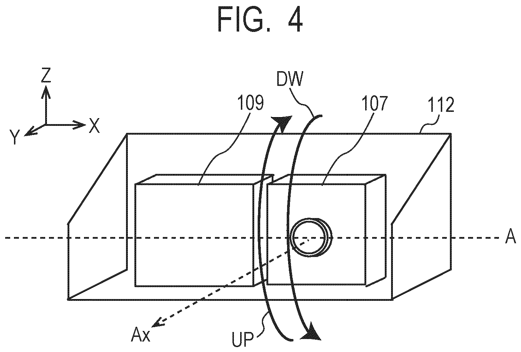

FIG. 4 is a perspective view for explaining the internal structure of the authentication device 10 according to the first embodiment. As illustrated in FIG. 4, the camera 107 is arranged in a case 112 together with the motor 109. Since the camera 107 is connected to the rotating shaft A of the motor 109, the camera 107 rotates together with the rotating shaft A. The rotating shaft A extends in the X-axis direction. As the camera 107 rotates around the rotating shaft A, an optical axis Ax of the camera 107 changes up and down. In the first embodiment, the capturing angle of the camera 107 indicates an angle of the optical axis Ax with respect to the horizontal plane.

Specifically, by driving the motor 109, the camera 107 rotates around the rotating shaft A in the direction of an arrow UP or an arrow DW. When the camera 107 rotates in the direction of the arrow UP, the capturing range of the camera 107 moves upward. Conversely, when the camera 107 rotates in the direction of the arrow DW, the capturing range of the camera 107 moves downward.

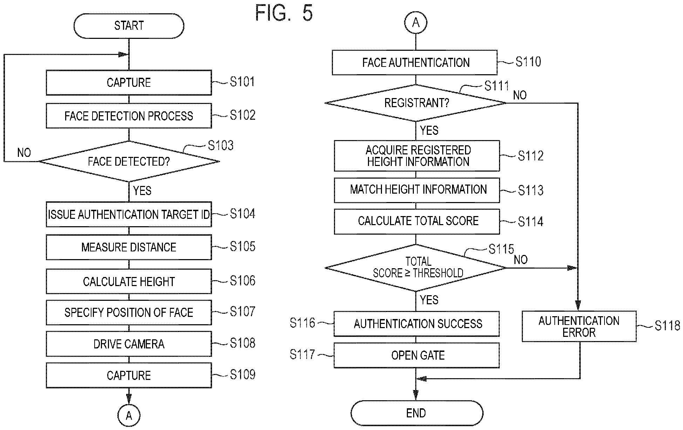

FIG. 5 is a flowchart schematically illustrating a process performed by the authentication system 1 according to the first embodiment.

In step S101, the authentication device 10 acquires a captured image of a predetermined area by capturing the front of the apparatus with the camera 107.

In step S102, the authentication device 10 performs a detection process of a face of the person in the captured image. Specifically, the authentication device 10 detects an area matched to the shape pattern of the face of the person in the captured image.

In step S103, the authentication device 10 determines whether or not the face of the person is detected in the captured image. If the authentication device 10 determines that the face of the person is detected (step S103: YES), the process proceeds to step S104.

On the other hand, if the authentication device 10 determines that the face of the person is not detected (step S103: NO), the process returns to the step S101.

In step S104, the authentication device 10 issues an authentication target ID of the person whose face is detected. The authentication target ID is identification information unique to each person.

In step S105, the authentication device 10 measures a distance in the horizontal direction from the authentication device 10 (camera 107) to the person by the distance sensor 108.

In step S106, the authentication device 10 calculates the height of the person based on the measured distance and the height of the camera 107 from the ground. The height information of the camera 107 is stored in advance in, for example, the storage 104 and the ROM 103.

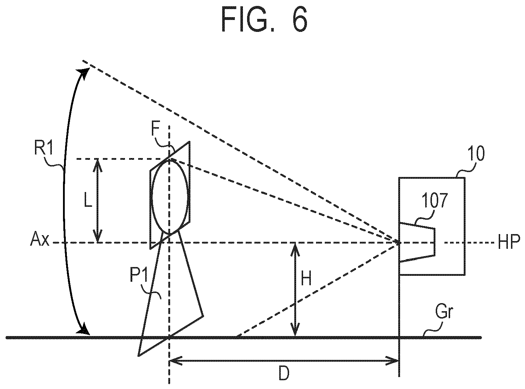

FIG. 6 is a schematic diagram for explaining a capturing angle and a capturing range of the camera 107 when a person P1 is captured in the authentication system 1 according to the first embodiment. In FIG. 6, the camera 107 is arranged so that the optical axis Ax of the camera 107 is horizontal, and the capturing angle is zero degrees. The capturing range R1 in FIG. 6 includes the face and upper body of the person P1.

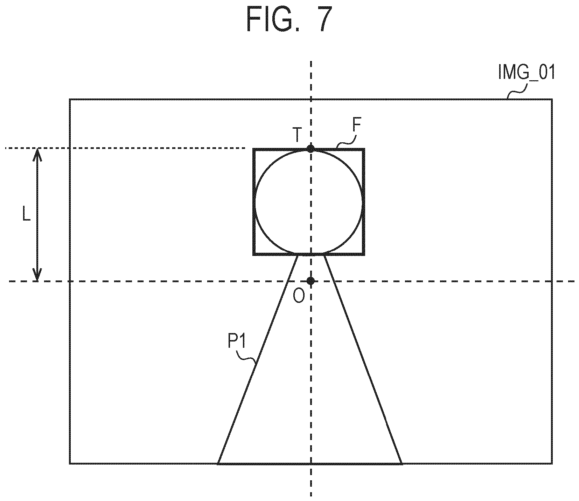

FIG. 7 illustrates a captured image IMG-01 captured at the capturing angle illustrated in FIG. 6. The center point O of the captured image IMG-01 is located below the face detection region F of the person P1. The length L illustrated in FIG. 6 is calculated based on the intra-image distance from the center point O to the top of the head T of the person P1.

In step S107, the authentication device 10 specifies the position of the face of the person in the captured image. In the example of FIG. 7, the position of the center point of the face detection region F related to the person P1 is the position of the face of the person.

In step S108, the authentication device 10 drives the camera 107 so that the position of the face of the person identified in the step S107 is located at the center point of the captured image.

In step S109, the authentication device 10 acquires a captured image including the face of the person by capturing the forward direction of the device with the camera 107.

In step S110, the authentication device 10 extracts a face image of the person from the captured image acquired in step S109 and transmits the face image to the authentication server 20. In this way, the authentication engine 21 of the authentication server 20 matches the face image with the registered face image previously registered in the database 22, and performs the face authentication of the person. When the authentication server 20 completes the face authentication, the authentication server 20 transmits the authentication result to the authentication device 10. The authentication result includes an authentication score indicating the degree of agreement between the face image of the person and the registered face image of the registrant.

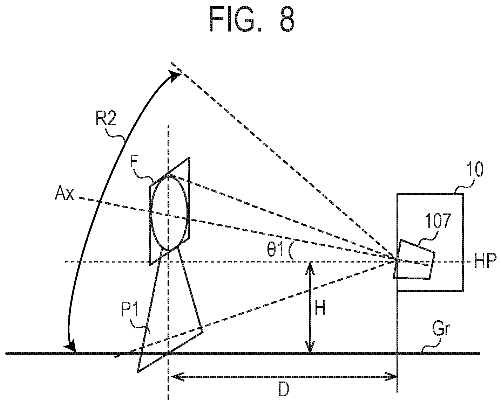

FIG. 8 is a schematic diagram for explaining a capturing angle and a capturing range of the camera 107 when the person P1 is captured in the authentication system 1 according to the first embodiment.

In FIG. 8, compared with the case of FIG. 6, the optical axis Ax of the camera 107 is driven upward, and the capturing angle is changed from zero degrees to +01. Therefore, the capturing range R2 of the camera 107 in FIG. 8 is moved vertically upward from the capturing range R1 illustrated in FIG. 6.

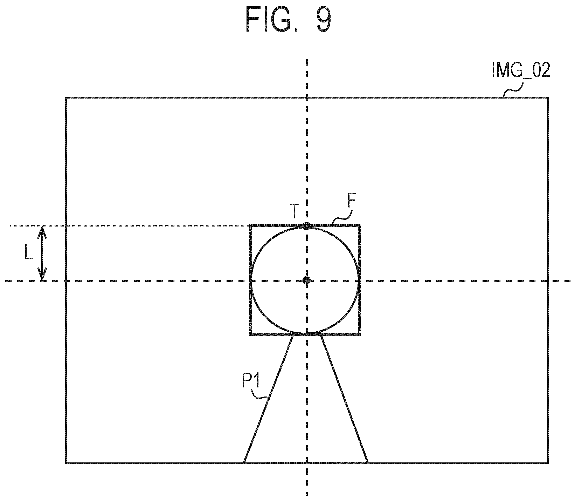

FIG. 9 illustrates a captured image IMG-02 captured at the capturing angle illustrated in FIG. 8. The center point O of the captured image IMG-02 matches with the center point of the face detection region F of the person P1. In this way, a high-quality face image capable of improving the accuracy of face authentication can be acquired from the face detection region F of the person P1. The distance L between the center point O and the vertex T of the person P1 can be calculated from the capturing angle, the angle of view of the camera 107, the distance in the horizontal direction, and the intra-image distance. Therefore, even when the capturing angle of the camera 107 is changed, the height of the vertex of the person can be easily calculated.

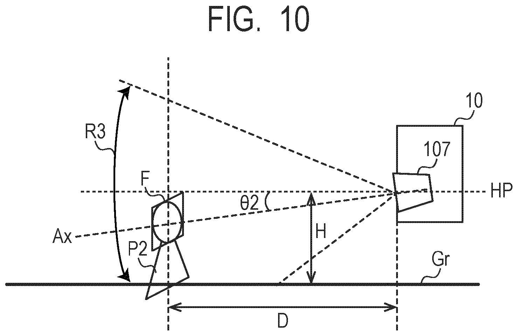

FIG. 10 is a schematic diagram for explaining a capturing angle and a capturing range of the camera 107 when a person P2 is captured in the authentication system 1 according to the first embodiment.

Since the height of the person P2 is lower than the height of the person P1, the optical axis Ax of the camera 107 is driven downward in FIG. 10 compared with the case of FIG. 6, and the capturing angle is changed from zero degrees to -θ2. Therefore, the capturing range R3 of the camera 107 in FIG. 10 is moved vertically downward from the capturing range R1 illustrated in FIG. 6.

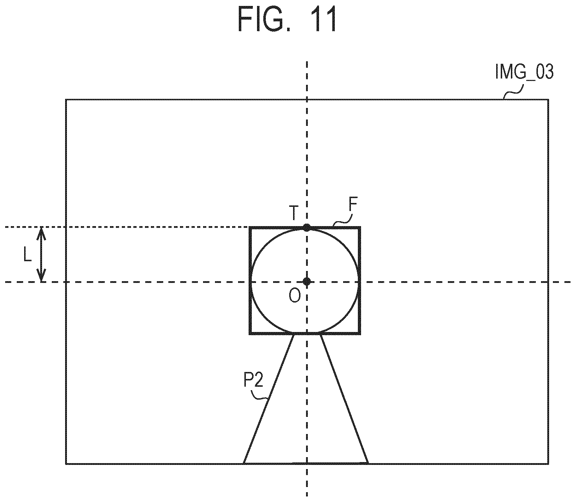

FIG. 11 illustrates a captured image IMG-03 captured at the capturing angle illustrated in FIG. 10. As in the case of FIG. 9, the center point O of the captured image IMG-03 matches with the center point of the face detection region F of the person P2. In this way, a high-quality face image capable of improving the accuracy of face authentication can be acquired from the face detection region F of the person P2. The distance L between the center point O and the vertex T of the person P2 can be calculated from the capturing angle, the angle of view of the camera 107, the distance in the horizontal direction, and intra-image distance.

In step S111, the authentication device 10 determines whether or not the person is the registrant based on the authentication result received from the authentication server 20. If the authentication device 10 determines that the person is the registrant (step S111: YES), the process proceeds to step S112.

On the other hand, if the authentication device 10 determines that the person is not the registrant (step Sill: NO), the authentication device 10 displays the authentication error message on the display 106 (step S118), and the process ends.

In step S112, the authentication device 10 acquires registered height information about the registrant from the authentication server 20.

In step S113, the authentication device 10 matches the height value calculated in the step S106 with the registered height information, and calculates a matching score indicating the matching degree of the heights. The authentication score in the biometric authentication and the matching score of the height are temporarily stored in RAM or storage, for example, in association with the authentication target ID.

In step S114, the authentication device 10 calculates a total score from the authentication score included in the authentication result received from the authentication server 20 and the matching score calculated in step 5111. The calculation method of the total score is defined arbitrarily.

In step S115, the authentication device 10 determines whether or not the calculated total score is equal to or greater than a predetermined threshold. If the authentication device 10 determines that the total score is equal to or greater than the predetermined threshold (step S115: YES), the process proceeds to the step S116.

On the other hand, if the authentication device determines that the total score is less than the predetermined threshold (step S115: NO), the authentication device 10 displays an authentication error message on the display 106 (step S118), and the process ends.

In step S116, the authentication device 10 displays an authentication success message on the display 106 and outputs control information to the gate device 30.

In step S117, the gate device 30 opens the gate based on the control information from the authentication device 10.

As described above, according to the authentication system 1 of the first embodiment, even when the capturing angle of the camera 107 is changed, the height of the predetermined part of the person can be easily estimated based on the capturing angle of the camera 107 at the time of capturing. Further, by driving the camera 107, the face image used for biometric authentication can be captured at an appropriate capturing angle. Further, since information on the capturing angle is managed in the control system of the authentication device 10, even when the capturing range is changed by driving the camera 107, the height can be calculated based on the changed capturing angle.

Further, according to the authentication system 1 of the first embodiment, the height of the person can be estimated based on the intra-image distance from the center of the captured image to the position of the predetermined part of the person, the horizontal distance from the person to the authentication device 10, and the capturing angle. Therefore, the height of the person can be estimated with high accuracy.

According to the authentication system 1 of the first embodiment, it is possible to obtain height information (height information) of a person, which is useful for identifying an individual, by a simple calculation. Further, two-factor authentication can be performed. The two-factor authentication is combined two of face authentication (first biometric authentication) using the biometric image of the person and the registered biometric image, and authentication (second biometric authentication) using the height information calculated from the image and the registered height information stored in the database 22. In this way, the authentication system 1 can provide high-precision personal authentication with with a low probability of acceptance toward others and a low probability of rejection toward the identical person.

Further, the authentication system 1 according to the first embodiment performs face authentication using the face image and the registered face image as the first biometric authentication. There are advantages that the face image can be acquired from the captured image, and height information up to a predetermined part, such as the top of the head, can be easily calculated.

Further, the authentication system 1 according to the first embodiment uses the angle of the optical axis of the camera 107 (capturing unit) with respect to the horizontal plane as the capturing angle. In this way, the predetermined part of the target can be easily calculated.

### [Second Embodiment]

Hereinafter, the authentication system 1 according to a second embodiment will be described. Hereinafter, the differences from the first embodiment will be mainly described, and the description of common parts will be omitted or simplified.

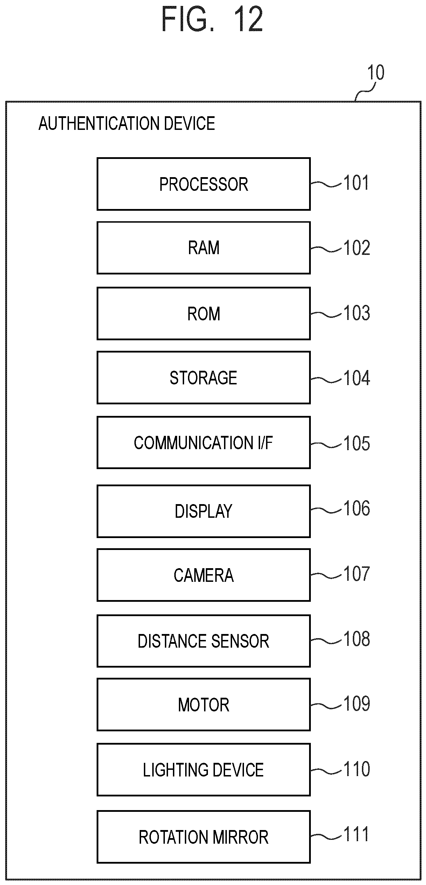

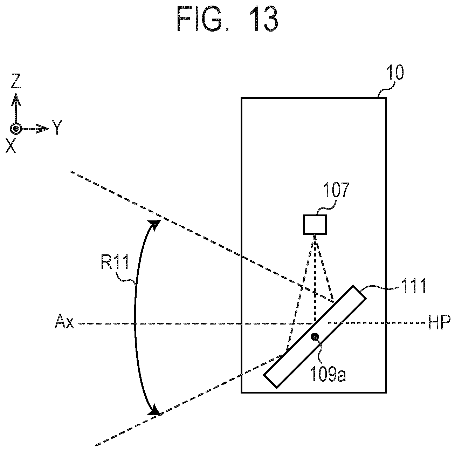

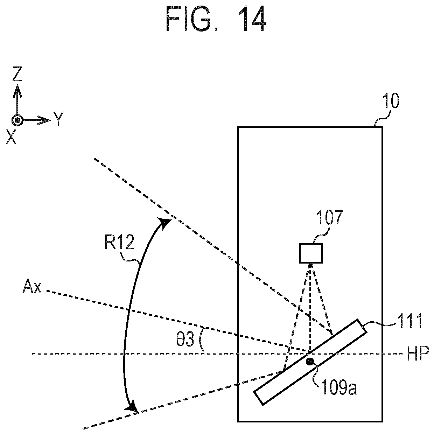

FIG. 12 is a block diagram illustrating an example of a hardware configuration of the authentication device 10 according to the second embodiment. FIGs. 13 and 14 are schematic diagrams for explaining the capturing method and capturing range of the authentication device 10 according to the second embodiment.

As illustrated in FIG. 12, unlike the hardware configuration illustrated in FIG. 2, the authentication device 10 further includes a rotation mirror 111.

The rotation mirror 111 is provided so as to be movable in the vertical direction with respect to the horizontal. The rotation mirror 111 is a member that reflects light incident from the outside of the authentication device 10 toward the camera 107.

As illustrated in FIGS. 13 and 14, the rotation mirror 111 is connected to the rotating shaft 109a of the motor 109 and rotates together with the rotating shaft 109a. Specifically, the camera 107 rotates integrally around the rotating shaft 109a when the motor 109 is driven. The rotation mirror 111 may not be directly connected to the rotating shaft 109a of the motor 109. For example, the camera 107 may be indirectly connected to the rotating shaft 109a via a gear or a belt and driven by the motor 109.

Unlike the first embodiment, the camera 107 is not connected to the motor 109 but is fixed in the authentication device 10. Further, the lens surface of the camera 107 is positioned vertically downward to face the reflecting surface of the rotation mirror 111.

In FIG. 13, the rotation mirror 111 is inclined by 45 degrees with respect to the horizontal plane HP. The capturing angle of the camera 107 is zero degrees, which is the angle at which the optical axis Ax of the camera 107 intersects the horizontal plane HP.

On the other hand, in FIG. 14, the rotation mirror 111 is rotated clockwise compared with the state of FIG. 13. Therefore, the angle at which the optical axis Ax of the camera 107 intersects the horizontal plane HP is θ3. That is, the capturing angle of the camera 107 in FIG. 14 is θ3.

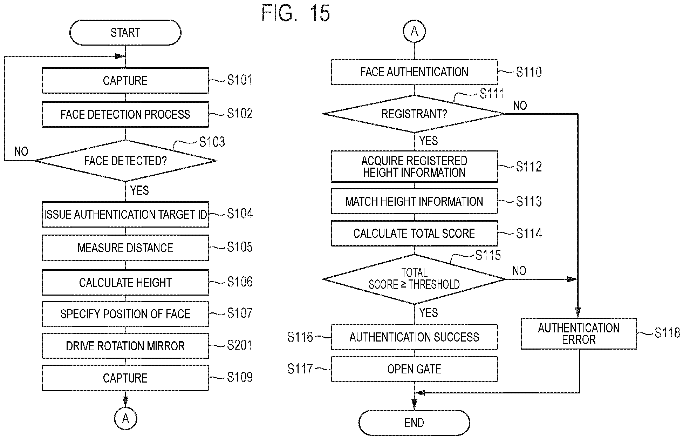

FIG. 15 is a flowchart schematically illustrating a process performed by the authentication system 1 according to the second embodiment. The processes of FIG. 15 differs only in part from the flowchart illustrated in FIG. 5.

In step S201, the authentication device 10 drives the rotation mirror 111 so that the position of the face of the person identified in the step S107 is positioned at the center of the captured image. That is, the authentication device 10 rotates the rotation mirror 111 to adjust the relative position between the face of the person and the rotation mirror 111. In this way, the authentication device 10 can generate a captured image in which the entire face of the person to be authenticated is captured. Thereafter, the process proceeds to step S109. The processes after step S109 is similar to that in FIG. 5.

As described above, according to the authentication system 1 of the second embodiment, the camera 107 itself may not be driven in order to change the capturing angle of the camera 107. By driving the rotation mirror 111 instead of the camera 107, a face image used for biometric authentication can be captured at an appropriate capturing angle. Information on the rotation angle of the rotation mirror 111 is managed by the control system of the authentication device 10. Since the capturing angle can be determined from the rotation angle of the rotation mirror 111, as in the first embodiment, the height of a predetermined part of an authentication target in a captured image can be easily estimated.

### [Third Embodiment]

The authentication system 1 according to a third embodiment will be described below. Hereinafter, differences from the second embodiment will be mainly described, and descriptions of common parts will be omitted or simplified.

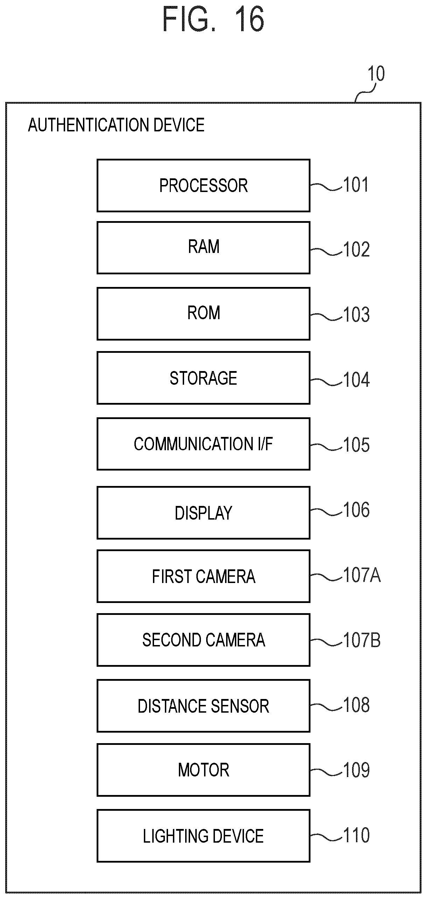

FIG. 16 is a block diagram illustrating an example of a hardware configuration of the authentication device 10 according to the third embodiment. As illustrated in FIG. 16, the authentication device 10 includes a first camera 107A and a second camera 107B instead of the camera 107 illustrated in FIG. 12.

The first camera 107A is a capturing device that generates an image overviewing a predetermined area as a whole. As the first camera 107A, a digital camera using a CMOS image sensor, a CCD image sensor or the like is used so as to be suitable for image processing in the authentication device 10.

The second camera 107B is a capturing device comprising an infrared light irradiation device (not illustrated) and an infrared light camera (not illustrated), and captures eyes of the person with infrared light. The infrared light irradiation device includes a light-emitting element such as an infrared light LED that emits infrared light. The wavelength of the infrared light emitted from the infrared light irradiation device may be, for example, a near-infrared region of about 800 nm.

The infrared light camera includes a light-receiving element configured to have sensitivity to infrared light. The infrared light camera may be a digital camera using a CMOS image sensor, a CCD image sensor, or the like. The infrared light irradiation device irradiates eyes of the person with infrared light, and the infrared light reflected by the iris is captured by the infrared light camera to acquire an eye image including an iris image used for iris authentication. By acquiring the iris image captured by the infrared light, a high contrast image can be obtained regardless of the color of the iris, and the influence of the reflection by the cornea can be reduced.

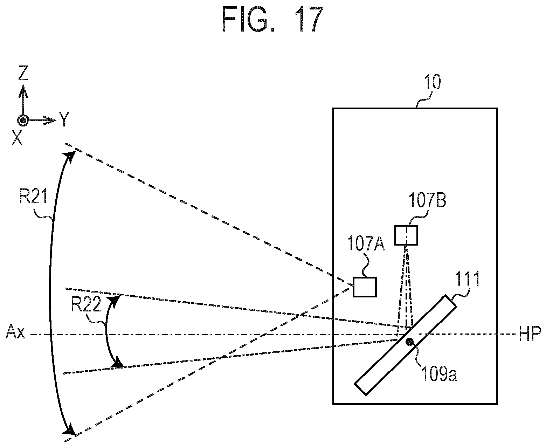

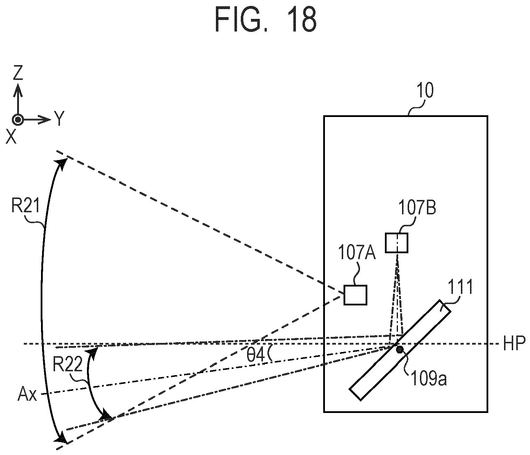

FIGS. 17 and 18 are schematic views for explaining a capturing angle and a capturing range of the authentication device 10 according to the third embodiment. As illustrated in FIGS. 17 and 18, the first camera 107A is arranged in the horizontal direction. The first camera 107A is not connected to the rotating shaft of the motor 109. That is, the capturing angle of the first camera 107A is constant.

On the other hand, the light receiving surface of the second camera 107B is positioned vertically downward to face the reflecting surface of the rotation mirror 111. The second camera 107B is connected to the rotating shaft 109a of the motor 109 and can rotate together with the rotating shaft 109a. FIG. 17 illustrates a state before the second camera 107B is driven. On the other hand, FIG. 18 illustrates a state in which the second camera 107B is rotated counterclockwise from the state illustrated in FIG. 17. The angle at which the optical axis Ax of the second camera 107B intersects the horizontal plane HP is -θ4. That is, the capturing angle of the second camera 107B in FIG. 18 is -θ4.

The capturing range R21 of the first camera 107A is wider than the capturing range R22 of the second camera 107B. That is, the angle of view of the first camera 107A is larger than the angle of view of the second camera 107B. The authentication device 10 may move the capturing range R22 of the iris camera 12 by rotating the rotation mirror 111 using a motor. The authentication device 10 moves the capturing range R22 of the second camera 107B by changing the inclination angle of the rotation mirror 111 using the motor 109. For example, the authentication device 10 can move the capturing range R22 of the second camera 107B up and down along the vertical direction by rotating the rotation mirror 111.

It is also assumed that the face image and the iris image of the registrant are registered in advance in the database 22 of the third embodiment in order to perform the face authentication and the iris authentication. When the authentication device 10 requests the authentication server 20 for authentication, the authentication device 10 transmits the face image and the iris image of the authentication target to the authentication server 20.

As described above, according to the authentication system 1 of the third embodiment, since the iris image of the person can be further acquired as the biometric information, the three-factor authentication can be performed. In the the three-factor authentication, the iris authentication is further combined with the authentication based on the face authentication and the height information.

### [Fourth Embodiment]

The authentication system 1 according to a fourth embodiment will be described below. Hereinafter, differences from the first embodiment will be mainly described, and descriptions of common parts will be omitted or simplified.

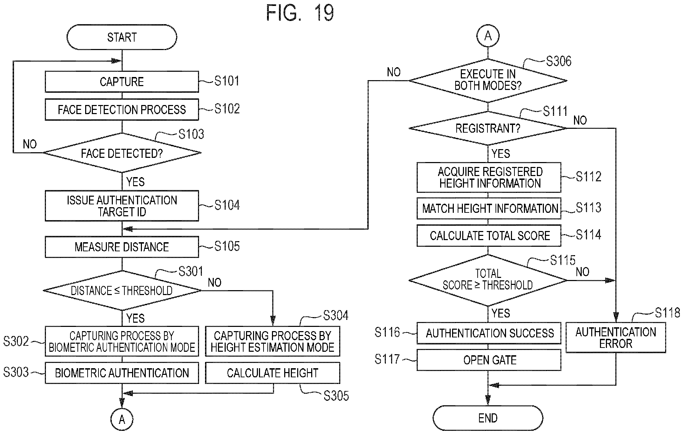

FIG. 19 is a flowchart schematically illustrating a process performed by the authentication system 1 according to the fourth embodiment. The processes illustrated in FIG. 19 differs only partially from the flowchart illustrated in FIG. 5.

In step S301, the authentication device 10 determines whether or not the distance measured in step S105 is less than or equal to a predetermined threshold. If the authentication device 10 determines that the distance is less than or equal to the threshold (step S301: YES), the process proceeds to step S302.

On the other hand, if the authentication device 10 determines that the distance exceeds the threshold (step S301: NO), the process proceeds to step S304.

In step S302, if the biometric authentication mode is selected as the setting mode of the capturing process, the authentication device 10 drives the camera 107 so that the capturing angle corresponds to the biometric authentication mode, and performs the capturing process. For example, in the biometric authentication mode, capturing is performed at a first capturing angle in which the center of the captured image is set to the face to be authenticated.

In step S303, the authentication device 10 acquires a face image of a person from the captured image captured in the step S302, and transmits the face image to the authentication server 20. In this way, the authentication engine 21 of the authentication server 20 performs the face authentication of the person by matching the face image with the registered face image previously registered in the database 22. When completing the face authentication, the authentication server 20 transmits the authentication result to the authentication device 10. Thereafter, the process proceeds to step S306.

Thus, the authentication server 20 performs face authentication based on the face image extracted from the captured image captured in the biometric authentication mode, thereby the authentication accuracy is improved.

In step S304, if the height estimation mode is selected as the setting mode of the capturing process, the authentication device 10 drives the camera 107 so that the image capturing angle corresponds to the height estimation mode, and performs the capturing process. For example, in the height estimation mode, the capturing process is performed at a second capturing angle in which the center of the captured image is set to the vertex of the authentication target.

By using the captured image captured in the height estimation mode for the height estimation process, the cost at the time of calculation is suppressed.

In step S305, the authentication device 10 calculates the height of the person based on the distance measured in step S105. Specifically, as described with reference to FIG. 6, the height of the person is calculated by calculating the position of the center coordinates of the captured image and the length L to the top of the face detection region F, and adding the height H to the center point of the camera 107 to the length L. Thereafter, the process proceeds to step S306.

In step S306, the authentication device 10 determines whether or not the capturing process is performed in both the biometric authentication mode and the height estimation mode. If the authentication device 10 determines that the capturing process is performed in both modes (step S306: YES), the process proceeds to step 5111. The processes after step S111 are the same as those in the first embodiment.

On the other hand, if the authentication device 10 determines that the capturing process is not performed in both modes (step S306: NO), the process returns to the step S105. The processes of the step S105 and the steps 301 to 306 are repeatedly performed until the capturing processes in the two modes are completed. Regarding the process of biometric authentication (step S303), the second and subsequent processes may be omitted based on the result of the first authentication.

In the above flowchart, the biometric authentication mode is performed when the distance is equal to or less than the threshold, and the height estimation mode is performed when the distance exceeds the threshold. The setting mode to be executed may be reversed, and the threshold may be freely set. In other words, the biometric authentication mode may be performed when the distance is equal to or less than the threshold, and the biometric authentication mode may be performed when the distance exceeds the threshold.

In the above flowchart, the biometric authentication is performed on the condition that the distance from the authentication device 10 to the authentication target is equal to or less than the threshold. The execution conditions of the biometric authentication are constant regardless of the length of the distance. However, the processing may be partially changed so that the threshold in at least one of the biometric authentication mode (first biometric authentication) and the height estimation mode (second biometric authentication) is changed according to the distance. Generally, the closer the distance, the higher the quality of the face image can be acquired. Conversely, the farther the distance, the lower the quality of the acquired face image. Therefore, by changing the threshold according to the distance, the execution condition of the biometric authentication is changed according to the quality of the face image to be used. Therefore, the accuracy of the biometric authentication can be further improved.

As described above, according to the authentication system 1 of the fourth embodiment, the setting mode corresponding to the appropriate capturing angle can be selected according to the distance from the authentication device 10 to the authentication target, and the capturing process can be performed while switching the capturing angle. In this way, the accuracy of the face authentication can be further improved.

### [Fifth Embodiment]

The authentication system 1 according to a fifth embodiment will be described below. Hereinafter, differences from the first embodiment will be mainly described, and descriptions of common parts will be omitted or simplified.

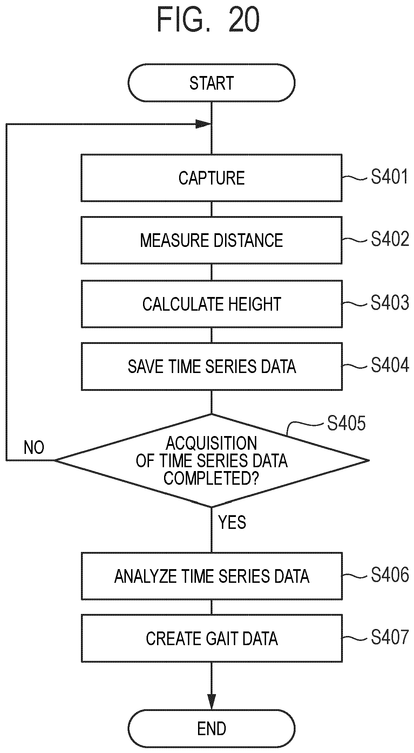

FIG. 20 is a flowchart schematically illustrating a process performed by the authentication system 1 according to the fifth embodiment. The process illustrated in FIG. 20 may be performed in the process illustrated in FIG. 5 or in parallel with the process illustrated in FIG. 5.

In step S401, the authentication device 10 captures a person with the camera 107 whose capturing angle is changed.

In step S402, the authentication device 10 measures the horizontal distance from the authentication device 10 (camera 107) to the person by the distance sensor 108.

In step S403, the authentication device 10 calculates the height of the person based on the captured image, the capturing angle, and the distance.

In step S404, the authentication device 10 stores the calculated height in a storage area as time-series data. The storage area of the storage destination is the storage 104 or the database 22 of the authentication server 20.

In step S405, the authentication device 10 determines whether the acquisition of the time series data is completed. If the authentication device 10 determines that the acquisition of the time series data is completed (step S405: YES), the process proceeds to step S406.

On the other hand, if the authentication device 10 determines that the acquisition of the time series data is not completed (step S405: NO), the process returns to step S401. The processes of steps S401 to S404 are repeatedly performed at a predetermined cycle.

In step S406, the authentication device 10 analyzes the time series data of the height. The time series data is data indicating the time change (transition) of the height of the person in the time series.

In step S407, the authentication device 10 creates the gait data of the person based on the analysis result in step S406, and ends the process. Normally, when a person moves by foot, the height of the top of the head changes in the vertical direction. Therefore, the gait of the person can be obtained by calculating the height of a predetermined part of the person multiple times in a predetermined cycle.

As described above, according to the authentication system 1 of the fifth embodiment, the gait data of the person can be easily created by acquiring the height of the person as time series data. In addition, the height of the person can be estimated with high accuracy by calculating the height of the person multiple times.

### [Sixth Embodiment]

The authentication system 1 according to a sixth embodiment will be described below. Hereinafter, differences from the fifth embodiment will be mainly described, and descriptions of common parts will be omitted or simplified.

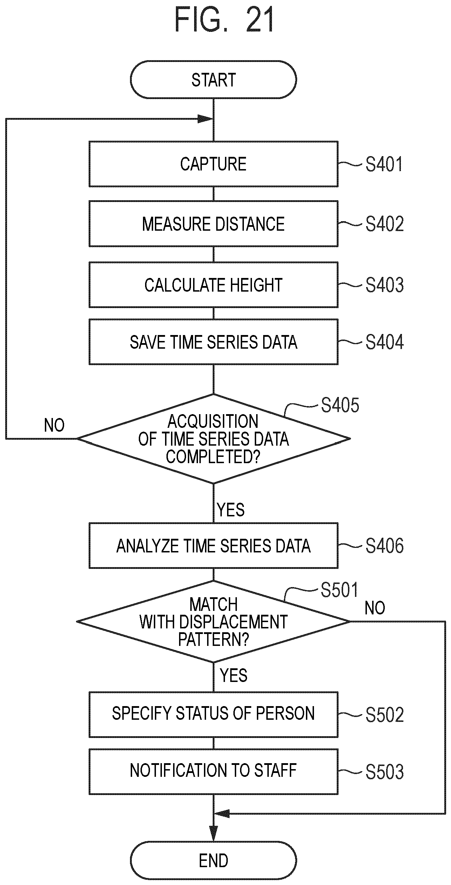

FIG. 21 is a flowchart schematically illustrating a process performed by the authentication system 1 according to the sixth embodiment. The processes illustrated in FIG. 21 differs only in part from the flowchart illustrated in FIG. 20.

In step S501, the authentication device 10 determines whether or not the time-series data matches with the specific displacement pattern. If the authentication device 10 determines that the time-series data matches with a specific displacement pattern (step S501: YES), the process proceeds to step S502.

On the other hand, if the authentication device 10 determines that the time-series data does not match with the specific displacement pattern (step S501: NO), the process ends.

In step S502, the authentication device 10 specifies a state of the person at the time of movement based on the matched displacement pattern. The state of the person at the time of movement includes a state in which walking is difficult, a state in which a specific article is used at the time of movement, and the like. Examples of the article include a wheelchair, a cane, a handcart, and the like.

Specifically, when a person is using a wheelchair to move, it is expected that the displacement width in the time series of the height of the top of the head of the person becomes smaller than that during normal walking. On the other hand, in the case of a person using a cane or a person who is lame, it is expected that the displacement width in the time series of the height of the top of the head of the person becomes larger than that during normal walking. Therefore, the state of the person can be specified from the time series data by registering the relationship between the state of the person and the time change of the height of a predetermined part of the person during moving as the displacement pattern.

In step S503, the authentication device 10 notifies a staff according to the state of the person during moving. For example, when the authentication device 10 determines that the person is using the wheelchair, it is preferable to output a notification to call the staff of the facility to the entrance/exit gate.

As described above, according to the authentication system 1 of the sixth embodiment, the state of the article and the person used by the person for moving can be specified based on the time change of the height of a predetermined part of the person. As a result, it is possible to automatically detect a person who needs the support of the staff when passing through a gate and performing authentication, and to quickly respond to the person.

### [Seventh Embodiment]

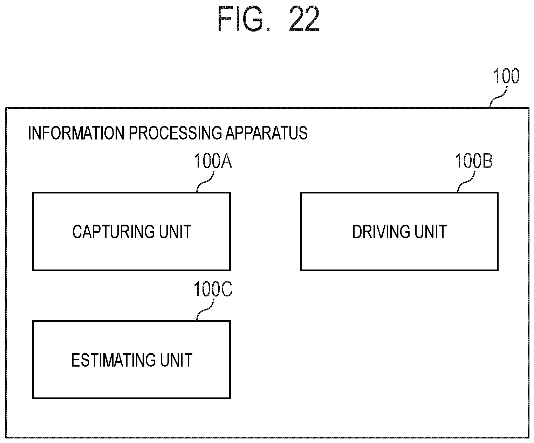

FIG. 22 is a functional block diagram illustrating the overall configuration of the information processing apparatus 100 according to a seventh embodiment. The information processing apparatus 100 includes a capturing unit 100A, a driving unit 100B, and an estimating unit 100C. The capturing unit 100A captures a target and generates a captured image. The driving unit 100B changes the capturing angle of the capturing unit 100A. The estimating unit 100C estimates height information of a predetermined part of the target based on the captured image of the target and the capturing angle.

According to the seventh embodiment, there is provided an information processing apparatus 100 capable of acquiring a biometric image suitable for biometric authentication.

### [Modified Embodiment]

This disclosure is not limited to the example embodiments described above and can be changed as appropriate within the scope not departing from the spirit of this disclosure. For example, an example in which a configuration of a part of any of the example embodiments is added to another example embodiment or an example in which a configuration of a part of any of the example embodiments is replaced with a configuration of a part of another example embodiment is also an example embodiment of this disclosure.

In the above-described first embodiment, the biometric authentication and the height estimation are performed based on an image captured by the same camera, but the image may be captured by a different capturing device for each use of the image. Specifically, if the authentication device 10 includes a camera for authentication and a camera for height estimation, the biometric authentication based on the first captured image captured by the authentication camera and the height information estimation process based on the second captured image captured by the height estimation camera may be performed in parallel.

In the above-described first embodiment, the height information estimation process is performed only once. However, the height information estimation process may be performed every time the capturing angle is changed. That is, when the camera 107 is driven to change the capturing angle after the height information is once estimated, the height information is acquired again. For example, when a person moves toward a gate, the distance between the camera 107 and the person gradually decreases. In such a case, it is preferable to perform two-factor authentication based on the most recent captured image and the capturing angle. In this way, the authentication accuracy is further improved.

In the above-described first to seventh embodiments, entry/exit using a gate is taken as an example, but this disclosure can also be applied to a scene where an individual is authenticated for a settlement at a financial institution or a retail store, entry/exit management of a hotel or an apartment building, a keyless entry system for a car, and the like.

In the above-described first to seventh embodiments, the authentication server 20 provided outside the authentication device 10 includes the authentication engine 21 and the database 22, which are used for extracting biometric information and calculating a matching score, but the functions of the authentication engine 21 and the database 22 may be provided inside the authentication device 10.

The scope of each of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the individual program itself. Further, one or two or more components included in the example embodiments described above may be circuitry such as application specific integrated circuit (ASIC), field programmable gate array (FPGA), or the like configured to implement the function of each component.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments also includes an example that operates on an operating system (OS) to perform a process in cooperation with another software or a function of an add-in board without being limited to an example that performs a process by an individual program stored in the storage medium.

The service implemented by the function of each example embodiment described above can also be provided to a user in a form of Software as a Service (SaaS).

Note that all the example embodiments described above are to simply illustrate embodied examples in implementing this disclosure, and the technical scope of this disclosure should not be construed in a limiting sense by those example embodiments. That is, this disclosure can be implemented in various forms without departing from the technical concept or the primary feature thereof.

The whole or part of the example embodiments disclosed above can be described as, but not limited to, the following supplementary notes.

### (Supplementary Note 1)

An information processing apparatus comprising:
a capturing unit that captures a target and generates a captured image;
a driving unit that changes a capturing angle of the capturing unit; and
an estimating unit that estimates height information of a predetermined part of the target based on the captured image and the capturing angle.

### (Supplementary Note 2)

The information processing apparatus according to supplementary note 1,
wherein the driving unit changes the capturing angle by driving the capturing unit.

### (Supplementary Note 3)

The information processing apparatus according to supplementary note 4,
wherein the capturing unit includes a mirror that reflects light incident from the target toward a light receiving unit of the capturing unit, and
wherein the driving unit changes the capturing angle by driving the mirror.

### (Supplementary Note 4)

The information processing apparatus according to any one of supplementary notes 1 to 3, further comprising:
an acquiring unit that acquires a distance from the target to the capturing unit, and
wherein the estimating unit estimates the height information based on the distance, the capturing angle, and a position of the predetermined part in the captured image.

### (Supplementary Note 5)

The information processing apparatus according to supplementary note 4,
wherein the position of the predetermined part is determined based on an intra-image distance from a center point in the captured image.

### (Supplementary Note 6)

The information processing apparatus according to supplementary notes 4 or 5, further comprising:
a storage unit that stores registered biometric images of registrants and the registered height information of the registrants; and
an authentication unit that performs a first biometric authentication using the registered biometric images and the biometric image of the target included in the captured image, and a second biometric authentication using the registered height information and the height information.

### (Supplementary Note 7)

The information processing apparatus according to supplementary note 6,
wherein the authentication unit changes a threshold in at least one of the first biometric authentication and the second biometric authentication based on the distance.

### (Supplementary Note 8)

The information processing apparatus according to supplementary notes 6 or 7,
wherein the registered biometric images are registered face images of the registrants;
wherein the capturing unit generates the captured image including a face image of the target; and
wherein the authentication unit performs face authentication using the face image and the registered face image as the first biometric authentication.

### (Supplementary Note 9)

The information processing apparatus according to supplementary notes 6 or 7,
wherein the registered biometric images are registered face images and registered iris images of the registrants, and
wherein the capturing unit includes a first capturing unit that generates the captured image including the face image of the target, and a second capturing unit that generates the iris image of the target, and
wherein the authentication unit performs face authentication using the face image and the registered face images, and iris authentication using the iris image and the registered iris images, respectively, as the first biometric authentication.

### (Supplementary Note 10)

The information processing apparatus according to any one of supplementary notes 6 to 9,
wherein the driving unit changes the capturing angle according to the distance.

### (Supplementary Note 11)

The information processing apparatus according to supplementary note 10,
wherein the capturing unit performs a capturing process by a first capturing angle in which the center of the captured image is set to the face of the target when the distance is not less than a predetermined threshold, and performs a capturing process by a second capturing angle in which the center of the captured image is set to the top of the head of the target when the distance is less than the threshold.

### (Supplementary Note 12)

The information processing apparatus according to supplementary note 10,
wherein the capturing unit performs a capturing process by a first capturing angle for setting the center of the captured image to the face of the target when the distance is less than a predetermined threshold, and performs a capturing process by a second capturing angle for setting the center of the captured image to the vertex of the target when the distance is greater than or equal to the threshold.

### (Supplementary Note 13)

The information processing apparatus according to any one of supplementary notes 1 to 12, wherein the predetermined part is any one of a vertex, eyes, a nose, ears, a mouth, and a jaw.

### (Supplementary Note 14)

The information processing apparatus according to any one of supplementary notes 1 to 13,
wherein the estimating unit estimates the height information again when the driving unit changes the capturing angle after estimating the height information.

### (Supplementary Note 15)

The information processing apparatus according to any one of supplementary notes 1 to 14,
wherein the estimating unit estimates a gait of the target based on a time change of the height information.

### (Supplementary Note 16)

The information processing apparatus according to any one of supplementary notes 1 to 14, wherein the estimating unit estimates, based on a time change of the height information, an article that the target is using for moving.

### (Supplementary Note 17)

The information processing apparatus according to any one of supplementary notes 1 to 16, wherein the capturing angle is an angle of an optical axis of the capturing unit with respect to a horizontal plane.

### (Supplementary Note 18)

An information processing method comprising:
capturing a target by using a capturing device and generating a captured image;
changing a capturing angle of the capturing device; and
estimating height information of a predetermined part of the target based on the captured image and the capturing angle.

### (Supplementary Note 19)

A storage medium storing a program that causes a computer to perform:
capturing a target by using a capturing device and generating a captured image;
changing a capturing angle of the capturing device; and
estimating height information of a predetermined part of the target based on the captured image and the capturing angle.

### [Reference Signs List]

- 1: Authentication system
- 10: Authentication device
- 101: Processor
- 102: RAM
- 103: ROM
- 104: Storage
- 105: Communication I/F
- 106: Display
- 107: Camera
- 107A: First camera
- 107B: Second camera
- 108: Motor
- 109: Distance sensor
- 110: Lighting device
- 111: Rotation mirror
- 20: Authentication server
- 21: Authentication engine
- 22: Database (storage)
- 30: Gate device
- 100: Information processing apparatus
- 100A: Capturing unit
- 100B: Driving unit
- 100C: Estimating unit

## Claims

1. An information processing apparatus comprising:
a capturing unit that captures a target and generates a captured image;
a driving unit that changes a capturing angle of the capturing unit; and
an estimating unit that estimates height information of a predetermined part of the target based on the captured image and the capturing angle.

2. The information processing apparatus according to claim 1,
wherein the driving unit changes the capturing angle by driving the capturing unit.

3. The information processing apparatus according to claim 4,
wherein the capturing unit includes a mirror that reflects light incident from the target toward a light receiving unit of the capturing unit, and
wherein the driving unit changes the capturing angle by driving the mirror.

4. The information processing apparatus according to any one of claims 1 to 3, further comprising:
an acquiring unit that acquires a distance from the target to the capturing unit, and
wherein the estimating unit estimates the height information based on the distance, the capturing angle, and a position of the predetermined part in the captured image.

5. The information processing apparatus according to claim 4,
wherein the position of the predetermined part is determined based on an intra-image distance from a center point in the captured image.

6. The information processing apparatus according to claims 4 or 5, further comprising:
a storage unit that stores registered biometric images of registrants and the registered height information of the registrants; and
an authentication unit that performs a first biometric authentication using the registered biometric images and the biometric image of the target included in the captured image, and a second biometric authentication using the registered height information and the height information.

7. The information processing apparatus according to claim 6,
wherein the authentication unit changes a threshold in at least one of the first biometric authentication and the second biometric authentication based on the distance.

8. The information processing apparatus according to claims 6 or 7,
wherein the registered biometric images are registered face images of the registrants;
wherein the capturing unit generates the captured image including a face image of the target; and
wherein the authentication unit performs face authentication using the face image and the registered face image as the first biometric authentication.

9. The information processing apparatus according to claims 6 or 7,
wherein the registered biometric images are registered face images and registered iris images of the registrants, and
wherein the capturing unit includes a first capturing unit that generates the captured image including the face image of the target, and a second capturing unit that generates the iris image of the target, and
wherein the authentication unit performs face authentication using the face image and the registered face images, and iris authentication using the iris image and the registered iris images, respectively, as the first biometric authentication.

10. The information processing apparatus according to any one of claims 6 to 9,
wherein the driving unit changes the capturing angle according to the distance.

11. The information processing apparatus according to claim 10,
wherein the capturing unit performs a capturing process by a first capturing angle in which the center of the captured image is set to the face of the target when the distance is not less than a predetermined threshold, and performs a capturing process by a second capturing angle in which the center of the captured image is set to the top of the head of the target when the distance is less than the threshold.

12. The information processing apparatus according to claim 10,
wherein the capturing unit performs a capturing process by a first capturing angle for setting the center of the captured image to the face of the target when the distance is less than a predetermined threshold, and performs a capturing process by a second capturing angle for setting the center of the captured image to the vertex of the target when the distance is greater than or equal to the threshold.

13. The information processing apparatus according to any one of claims 1 to 12,
wherein the predetermined part is any one of a vertex, eyes, a nose, ears, a mouth, and a jaw.

14. The information processing apparatus according to any one of claims 1 to 13,
wherein the estimating unit estimates the height information again when the driving unit changes the capturing angle after estimating the height information.

15. The information processing apparatus according to any one of claims 1 to 14,
wherein the estimating unit estimates a gait of the target based on a time change of the height information.

16. The information processing apparatus according to any one of claims 1 to 14,
wherein the estimating unit estimates, based on a time change of the height information, an article that the target is using for moving.

17. The information processing apparatus according to any one of claims 1 to 16,
wherein the capturing angle is an angle of an optical axis of the capturing unit with respect to a horizontal plane.

18. An information processing method comprising:
capturing a target by using a capturing device and generating a captured image;
changing a capturing angle of the capturing device; and
estimating height information of a predetermined part of the target based on the captured image and the capturing angle.

19. A storage medium storing a program that causes a computer to perform:
capturing a target by using a capturing device and generating a captured image;
changing a capturing angle of the capturing device; and
estimating height information of a predetermined part of the target based on the captured image and the capturing angle.
